(19) Europäisches Patentamt
European Patent Office
Office européen des brevets

(11) Numéro de publication: **0 259 215 B1**

(12) **FASCICULE DE BREVET EUROPEEN**

(45) Date de publication du fascicule du brevet: **10.10.90**

(51) Int. Cl.[5]: **C08G 61/08**

(21) Numéro de dépôt: **87401905.2**

(22) Date de dépôt: **19.08.87**

(54) **Polymérisation d'hydrocarbures insaturés avec une période d'induction.**

(30) Priorité: **22.08.86 FR 8611978**

(43) Date de publication de la demande: **09.03.88 Bulletin 88/10**

(45) Mention de la délivrance du brevet: **10.10.90 Bulletin 90/41**

(84) Etats contractants désignés: **BE CH DE FR GB IT LI NL**

(56) Documents cités: **FR-A- 2 180 038**

(73) Titulaire: **SOCIETE NATIONALE ELF AQUITAINE Société anonyme dite, Tour Elf 2, Place de la Coupole La Défense 6, F-92400 Courbevoie(FR)**

(72) Inventeur: **Basset, Jean-Marie Maurice, 21 Petite rue de la Doua, F-69100 Villeurbanne(FR)**
Inventeur: **Leconte, Michel, 26 rue Jean-Claude Vivant, F-69100 Villeurbanne(FR)**
Inventeur: **Ollivier, Jean, Croix de Buzy, F-64260 Arudy(FR)**
Inventeur: **Quignard, Françoise, 15 rue du Charriot d'Or, F-69004 Lyon(FR)**

(74) Mandataire: **Kohn, Armand, 5 Avenue Foch, F-92380 Garches(FR)**

Il est rappelé que: Dans un délai de neuf mois à compter de la date de publication de la mention de la délivrance du brevet européen toute personne peut faire opposition au brevet européen délivré, auprès de l'Office européen des brevets. L'opposition doit être formée par écrit et motivée. Elle n'est réputée formée qu'après paiement de la taxe d'opposition (Art. 99(1) Convention sur le brevet européen).

EP 0 259 215 B1

ACTORUM AG

## Description

La présente invention se rapporte à un procédé amélioré de polymérisation par métathèse d'hydrocarbures insaturés ; elle vise, plus particulièrement, les cas où l'on a besoin d'une réaction de polymérisation lente au début, devenant très rapide après une certaine période d'induction initiale. Ainsi, l'invention se montre t-elle fort utile dans les procédés de moulage ou autre travail de polymères où un certain temps de manipulation du monomère est nécessaire avant le durcissement de celui-ci. Elle présente donc des avantages remarquables, entre autres, dans le procédé connu sous la dénomination RIM ("reaction injection molding") c'est-à-dire moulage par injection avec réaction, qui consiste à injecter dans un moule deux flux liquides : (1) un monomère contenant un catalyseur de polymérisation, et (2) même monomère, ou un autre, renfermant un co-catalyseur. Dans ce type de procédés, on a généralement besoin d'une première période d'environ 3 à 15 minutes sans réaction, ou avec une polymérisation très lente, suivies d'une réaction aussi rapide que possible. Par un choix spécifique du catalyseur, la présente invention permet de réaliser ces conditions de façon simple et économique, sans aucune des complications qu'exigeait la technique antérieure dans ce domaine.

En présence de certains systèmes catalytiques de métathèse, des oléfines cycliques, notamment le dicyclopentadiène subissent une réaction rapide de polymérisation conduisant à des polymères durs, rigides, possédant de très bonnes propriétés de résistance aux chocs. Une telle polymérisation peut être réalisée, selon le brevet US 4 400 340, en présence des systèmes catalytiques comprenant $WCl_6$, un phénol et un composé organo-aluminique. La publication française de brevet 2 547 513 (où US 4 550 216) a montré que des catalyseurs de métathèse du type

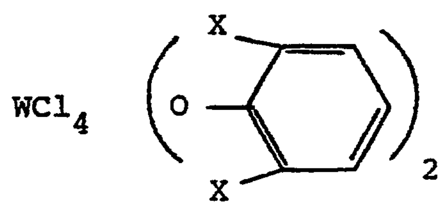

(X = halogène ou autre groupe électronégatif), associés à $C_2H_5AlCl_2$, permettent également d'obtenir une polymérisation très rapide. D'autre part, de nombreux composés du type $WCl_2(OAr)_4$ (OAr = groupe aryloxy) sont connus comme actifs dans la réaction de métathèse des oléfines, lorsqu'ils sont associés à des composés organo-aluminiques (H.T. DODD et K. J. RUTT, Journal of Molecular Catalysis, 15 (1982) 103-120 ; F. QUIGNARD, M. LECONTE et J.M. BASSET, J. of Mol. Catal. 28 (1985) 27-32). De nombreux autres complexes de W du même type sont mentionnés dans la publication nº 2 180 038 de Brevet français , en particulier des composés renfermant des groupes diisopropyl phénate convenant à la polymérisation d'oléfines cycliques. Le brevet américain nº 4 038 471 cite, comme pouvant être utilisés dans la préparation de polyoctenamères et de polybutenamères, les composés pentachlorure phénate de tungstène et tétrachlorure bis (2-chlorophénate) de tungstène.

Il existe donc une grande abondance de catalyseurs de métathèse, suivant la littérature technique. Et pourtant, lorsqu'il s'est agi de conduire la polymérisation rapidement, mais avec une période initiale lente, ou un temps mort initial, comme dans le cas du RIM mentionné plus haut, personne n'a pu appliquer un système catalytique approprié, seul ; on était obligé d'utiliser un adjuvant "modérateur" dans un des deux flux, afin d'éviter le bouchage, par une polymérisation prématurée, se produisant déjà dans le dispositif d'injection, avant le moule. C'est ainsi que le brevet US 4 400 340 décrit l'adjonction de modérateurs ou retardateurs de la polymérisation du dicyclopentadiène, tels qu'éthers, esters, cétones ou nitriles, au monomère renfermant l'acti vateur de la réaction, qui est le plus souvent un alkylaluminium. Cette addition complique le moulage et du fait de l'apport d'une substance étrangère modifie plus ou moins les qualités du polymère. Mais il n'a pas été possible,jusqu'à présent, d'éviter l'emploi d'un modérateur, parce qu'aucune théorie ne permettait de prévoir la nature du catalyseur à choisir, pour qu'une polymérisation rapide ait lieu seulement après un certain temps sans réaction, après l'addition du catalyseur au monomère. Or, tous les systèmes catalytiques, expérimentés jusqu'à présent, provoquent la réaction dès leur adjunction au monomère ; et la vitesse de polymérisation varie peu au cours du moulage ; ces systèmes ne se prêtent donc pas à l'opération sans modérateur. Il y avait, par conséquent, très peu de chances de trouver, parmi les nombreux catalyseurs, décrits dans la littérature, celui qui conviendrait sans modérateur, et une telle recherche aurait exigé des centaines, sinon des millieurs, d'essais.

Malgré cette absence de toute prémisse, les inventeurs du présent, nouveau procédé, ont pensé qu'une forte vitesse de polymérisation avec un temps mort initial, devrait être obtenue avec des complexes d'halogénures de tungstène ayant un ou des groupes phénoxy, où ce dernier porte des alkyles ramifiés en positions 2 et 6, et/ou un alkoxy en 4. Bien que certains de tels composés ait été signalés,dans la littérature chimique, comme catalyseurs de métathèse, il était impossible,pour les raisons susindiquées, d'en déduire qu'ils conviendraient sélectivement à la polymérisation avec un temps mort initial.

Ainsi, le procédé suivant l'invention, pour la polymérisation du dicyclopentadiène avec une période initiale d'induction, en l'absence d'agent modérateur de polymérisation, à l'aide d'un catalyseur de formule

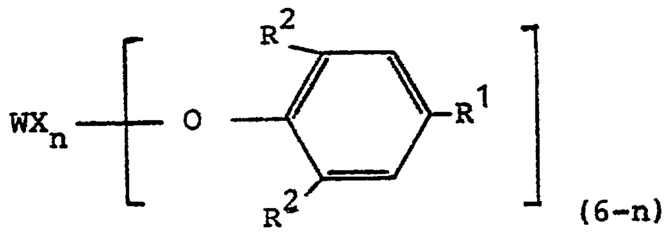

où X est Cl ou Br, n est 2 à 4, $R^1$ est H ou un groupe alkoxy et $R^2$ un H ou un alkyle ramifié en $C_3$ à $C_9$, ce catalyseur étant accompagné d'un co-catalyseur organo-metallique, est caractérisé en ce que, dans le catalyseur utilisé, lorsque $R^1$ est un groupe alkoxy en $C_1$ à $C_8$, les $R^2$ sont H et n = 2 ou 3, tandis que lorsque $R^1$ est H, les $R^2$ sont des alkyles ramifiés en $C_3$ à $C_9$ et n est egal à 3 ou 4.

Les groupes alkoxy $R^1$ peuvent en particulier répondre aux formules suivantes.

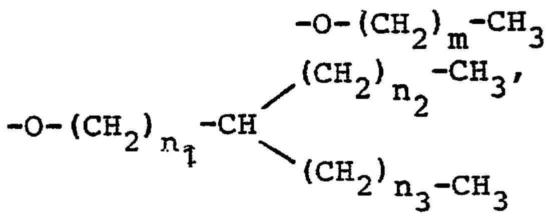

m allant de 0 à 7 par exemple méthoxy, éthoxy, propoxy ou butoxy $n, n_2, n_3$ sont des nombre entiers, égaux ou différents, allant de 0 à 5 avec $O \leqq n_1+n_2+n_3 \leqq 5$,

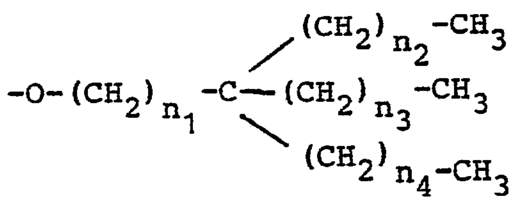

les nombres entiers $n_1$ $n_2 n_3 n_4$ égaux ou différents vont de 0 à 4 avec $O \leqq n_1+n_2+n_3+n_4 \leqq 4$

Les alkyles ramifiés $R^2$ peuvent être tels qu'isopropyle; isobutyle, tert-butyle, iso-amyle, tert-amyle ou similaire ; ils peuvent, par exemple, avoir la structure

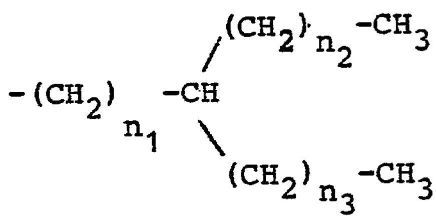

où $n_1, n_2 n_3$ désignent des nombres entiers, égaux ou différents, de 0 à 6 avec $O \leqq n_1+n_2+n_3 \leqq 6$.

D'autres exemples d'alkyles $R^2$ sont représentés par la formule :

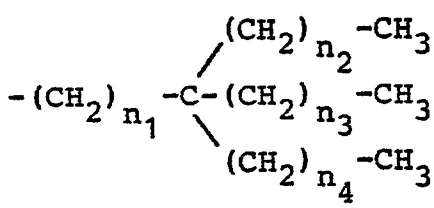

$n_1 n_2, n_3, n_4$, nombres entiers, égaux ou différents, allant de 0 à 5 avec $O \leqq n_1+n_2+n_3+n_4 \leqq 5$.

- Les deux $R^2$ doivent être ramifiés,mais ne sont pas obligatoirement identiques, ils peuvent différer même par un grand nombre d'atomes de C ; par exemple, l'un peut être l'isoamyle et l'autre diméthyl-2,4 heptyle.

Lorsque les deux $R^2$ sont des H, il est préférable que n soit 2 ; par contre avec des alkyles ramifiés en $R^2$, la meilleure valeur pour n est 3.

Ainsi, dans une forme préférée de l'invention, X est Cl, n égal à 2, $R^1$ est le groupe méthoxy $-OCH_3$ et $R^2$ est un atome d'hydrogène ; le composé, désigné par (A) dans la suite de la présente description répond à la formule :

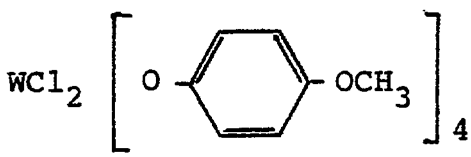 ......... (A)

Dans une autre forme préférée de l'invention, n est égal à 3, $R^1$ est un atome d'hydrogène et $R^2$ est le groupe iso-propyle

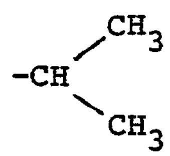 ;

le composé, désigné plus loin par (B), répond à la formule :

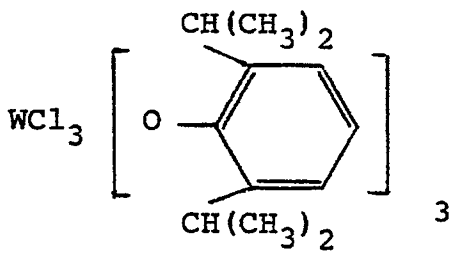 .........(B)

Le procédé suivant l'invention utilise, tout comme la technique antérieure, des co-catalyseurs ou activateurs associés au catalyseur de tungstène. Les divers composés organométalliques, connus comme co-catalyseurs peuvent être employés, notamment des combinaisons des types LiR, RMgX, $SnR_4$, $PbR_mX_{(4-m)}$ etc. et surtout $R_3Al$, $R_2AlX$ ou $RAlX_2$. Ainsi, obtient-on d'excellents résultats avec les activateurs classiques $C_2H_5Al\ Cl_2$ ou $(C_2H_5)_2\ Al\ Cl$.

Dans le cas, industriellement très important, de la polymérisation du dicyclopentadiène par la méthode RIM expliquée plus haut, la forme préférée du procédé de l'invention est réalisée avec un rapport molaire dicyclopentadiène/catalyseur comprise entre 100 et 20 000 et un rapport molaire alkyl-aluminium/catalyseur de 6 à 24. Dans une forme plus particulièrement préférée le rapport dicyclopentadiène/catalyseur est compris entre 2 000 et 4 000 et le rapport alkyl-aluminium/catalyseur égal à 12. Les réactions de polymérisation peuvent être conduites aussi bien en absence qu'en présence du solvant. Des solvants qui peuvent être utilisés sont par exemple le chlorobenzène, le benzène ou le toluène.

Les réactifs, c'est-à-dire le dicyclopentadiène, le catalyseur ( (A) ou (B) ), le co-catalyseur alkyl-aluminium et éventuellement le solvant sont mélangés et agités à la température ambiante et on constate alors que le mélange réactionnel reste fluide durant une période de 5mn à 10 mn. Une fois cette période d'induction écoulée, on constate que la polymérisation commence et, en une dizaine de secondes, on observe une élévation de température et la prise en masse du milieu réactionnel avec la formation d'un polymère dur, compact et insoluble dans les solvants organiques précités.

La période initiale, lente ou morte , de 5 à 10 minutes, susindiquée, correspond à une marche industrielle particulière ; il est cependant possible, avec le procédé suivant l'invention, de procurer une telle période initiale de toute durée nécessaire, notamment de 1 à 20 minutes.

Une série de composés, de formules générales $WCl_2(OAr)_4$, $WCl_3(OAr)_3$ et $WCl_4(OAr)_2$, apparentés aux catalyseurs (A) et (B) ont été utilisés dans la polymérisation du dicyclopentadiène dans les mêmes conditionsque les catalyseurs (A) et (B).

Des exemples représentatifs de ces composés sont donnés plus loin sous les dénominations (C) à (L) :
dichlorure tetrakis phénate de tungstène (C)

- dichlorure tetrakis (méthyl-3 phénate) de tungstène (D)
dichlorure tetrakis (diméthyl-3,5 phénate) de tungstène (E)
dichlorure tetrakis (tertiobutyl-4 phénate) de tungstène (F)
dichlorure tetrakis (chloro-4 phénate) de tungstène (G)
trichlorure tris (diméthyl-2,6 phénate) de tungstène (H)
trichlorure tris (triméthyl-2,4,6 phénate) de tungstène (I)
tétrachlorure bis (diphényl-2,6 phénate) de tungstène (J)
tétrachlorure bis (dichloro-2,6 phénate) de tungstène (K)
tétrachlorure bis (difluoro-2,6 phénate) de tungstène (L)

Il a été constaté qu'aucun de ces composés ne présentait une période d'induction à la polymérisation, comparable à celle qui a été trouvée avec les catalyseurs (A) et (B). Au contraire, on observe que la polymérisation totale du dicyclopentadiène s'effectue très rapidement, dans des temps compris entre environ 5s et environ 120s après le mélange des réactifs.

Il apparaît donc que les catalyseurs choisis suivant l'invention (A) et (B) sont très spécifiques et conviennent particulièrement bien à la polymérisation du dicyclopentadiène par le procédé RIM , puisqu'ils permettent d'obtenir, avec un système catalytique simplifié à 2 composants, du fait de l'absence de tout modérateur, des polymères durs, rigides et insolubles avec une vitesse de réaction compatible avec un procédé RIM.

Les exemples 1 et 2 ci-après montrent comment peuvent être préparés les catalyseurs selon la présente invention. Les exemples 3 à 14 illustrent la spécificité de ces catalyseurs vis-à-vis de catalyseurs apparentés, lorsqu'ils sont employés dans la polymérisation du dicyclopentadiène.

EXEMPLE 1

Préparation du catalyseur dichlorure tétrakis (méthoxy-4 phénate) de tungstène (A)

Dans un réacteur tricol, surmonté d'un réfrigérant et balayé par un courant d'argon sec, on introduit 3,3g $WCl_6$($8,25x10^{-3}$mol), 4,12g de méthoxy-4 phénol ($33,0x10^{-3}$mol) et 70 ml de toluène anhydre. Après chauffage à 80°C pendant 6h, évaporation du toluène et chromatographie sur colonne de silice (éluant : $CH_2Cl_2/CCl_4$ = 90/10), on récupère 2,8g de produit sous forme de cristaux de couleur noire mordorée. L'analyse élémentaire est conforme à la formule

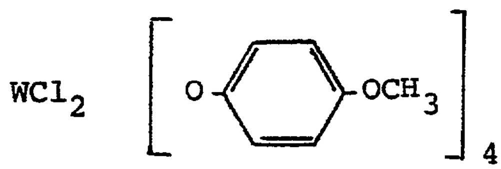

Calcul : C=45,00% H=3,75% Cl=9,5% W=24,63%
analysé: C=45,10% H=3,76% Cl=9,84% W=24,63%

EXEMPLE 2

Préparation du catalyseur trichlorure tris(diisopropyl-2,6 phénate) de tungstène (B)

Dans un réacteur tricol, surmonté d'un réfrigérant et balayé par un courant d'argon sec, on introduit 4,53g de $WCl_6$($11,4x10^{-3}$mol), 6,33g de diisopropyl-2,6phénol ($34,2x10^{-3}$mol) et 30 ml de tétrachlorure de carbone anhydre. Après chauffage à 75°C pendant 5 heures et évaporation du tétrachlorure de carbone, on récupère une huile noire qui est chromatographiée sur colonne de silice (éluant : toluène/cyclohéxane = 25/75). Après recristallisation par l'éthanol à -5°C on obtient 6,6 g de produit sous forme de cristaux parallélépipédiques de couleur noire.

L'analyse élémentaire est conforme à la formule :

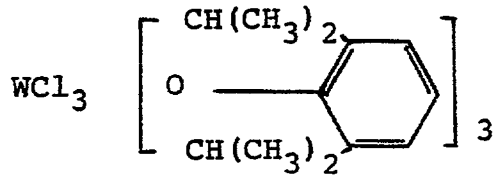

| | | | | |
|---|---|---|---|---|
| Calcul : | C=52,5% | H=6,21% | Cl=12,96% | W=22,40% |
| Analysé: | C=52,31% | H=6,50% | Cl=12,99% | W=22,62% |

EXEMPLES 3 à 14

Polymérisation du dicyclopentadiène avec les catalyseurs (A) à (L)

Les essais consistent à effecteur la polymérisation du dicyclopentadiène, en utilisant des systèmes catalytiques comprenant les catalyseurs (A) à (L) décrits plus haut et le chlorure d'alkyl-aluminium $C_2H_5$ Al $Cl_2$, et à comparer les vitesses de polymérisation obtenues avec chacun de ces catalyseurs.

Dans un réacteur pour travail discontinu, préalablement purgé à l'argon, on introduit 0,5 x $10^{-4}$ mole de composé tungsténique (catalyseur), 10 ml de chlorobenzène servant de solvant, 13,5 ml de dicyclopentadiène, ce qui correspond à un rapport molaire dicyclopentadiène/catalyseur égal à 2000 et, enfin, 6 x $10^4$mole de $C_2H_5AlCl_2$ comme co-catalyseur ; cela correspond à un rapport molaire $C_2H_5AlCl_2$/catalyseur égal à 12. L'addition de $C_2H_5AlCl_2$ détermine le temps 0 de la réaction. Les réactifs sont agités à température ambiante et, après un temps variable à partir du début de la réaction, on observe une augmentation de la viscosité du milieu réactionnel ; puis, très rapidement, se produit une prise en masse quasi instantanée et totale du mélange avec formation d'un polymère dur, compact et insoluble. Parallèlement, on mesure l'évolution de la température du milieu réactionnel et on constate que le début de la polymérisation se traduit par une élévation de température qui atteint un maximum lorsque la polymérisation est complète.

Dans le tableau ci-après sont indiqués, pour chaque catalyseur (A) à (L), le temps écoulé jusqu'au début de la polymérisation ainsi que l'élévation maximale de température. Il est à noter que tous les catalyseurs (A) à (L) conduisent à des polymères durs et insolubles.

TABLEAU

| Exemple n° | Catalyseur | Temps de réaction jusqu'au début de polymérisation | Elévation maximale de température |
|---|---|---|---|
| 3 | A | 600 s | 18,9°C |
| 4 | B | 310 s | 23 °C |
| 5 | C | 40 s | 4,5°C |
| 6 | D | 55 s | 5,9°C |
| 7 | E | 80 s | 6,9°C |
| 8 | F | 45 s | 5,8°C |
| 9 | G | 120 s | 6,1°C |
| 10 | H | 55 s | 7,3°C |
| 11 | I | 10 s | 5,6°C |
| 12 | J | 30 s | 6,5°C |
| 13 | K | 10 s | 4,7°C |
| 14 | L | 5 s | 4,1°C |

On constate que les catalyseurs (A) et (B) ont un comportement tout à fait particulier, si on les compare aux composés apparentés (C) à (L). Ils présentent une période d'induction avant le début de la polymé--risation suffisamment longue, pour qu'il soit possible de les employer facilement dans la polymérisation du dicyclopentadiène par procédé RIM, sans recours à un modérateur. On constate d'autre part, que la réaction de polymérisation effectuée avec les catalyseurs (A) ou (B) se traduit par un fort dégagement de chaleur, ce que laisse supposer que, passée la période d'induction, la polymérisation s'effectue très rapidement et complètement. Les autres composés (C) à (L) présentent des périodes d'induction inférieures à 2 mn et pour la plupart inférieures à 1mn, ce qui rend leur emploi malaisé, dans la polymérisation du dicyclopentadiène par procédé RIM, et rend nécessaire l'utilisation d'un modérateur de polymérisation.

EXEMPLES 15 à 17

De façon analogue aux exemples 1 et 2,on a préparé trois catalyseurs de formules différentes, mais répondant à la définition de l'invention. Comme pour les exemples précédents, on a déterminé le temps de réaction jusqu'au début de la polymérisation, ainsi que l'élévation maximale de la température (ΔT max) ; les résultats ci-après ont été trouvés.

| Exemple n° | Catalyseur | Temps | ΔTmax |
|---|---|---|---|
| 15 | Dichlorure-tétrakis (éthoxy-4-phénate) de W | 560s | 17,5°C |
| 16 | Dichlorure-tétrakis (butoxy-4-phénate) de W | 480s | 16°C |
| 17 | Trichlorure-tris(ditert-butyl-2,6-phénate) de W | 340s | 20,5°C |

La comparaison de ces résultats avec ceux du Tableau des exemples 3-14 confirme les avantages de l'invention, puisque les catalyseurs 15 à 17 présentent une période initiale sans polymérisation, contrairement aux catalyseurs classiques C à L, et - à côté de cela - une élévation maximale de température beaucoup plus élevée.

EXEMPLES 18 à 20

Préparation de plaques de polydicyclopentadiène par polymérisation dans un moule ; comparaison des catalyseurs A et B avec le catalyseur C

Les essais consistent à mélanger les réactifs : catalyseur (A, B ou C), co-catalyseur et dicyclopentadiène dans un réacteur pour travail discontinu, puis à transférer le mélange ainsi obtenu dans un moule parallélépipédique fermé,mais séparable en deux parties, dans lequel doit s'effectuer la polymérisation. Le moule est relié directement au réacteur par l'intermédiaire d'un tube de transfert. Dans le réacteur pour travail discontinu, préalablement purgé à l'argon, on introduit 0,5 x $10^{-4}$mole de catalyseur A, B ou C et 27ml de dicyclopentadiène, ce qui correspond à un rapport molaire dicyclopentadiène/catalyseur de 4 000. Le mélange est agité pendant 1 mn à la température ambiante, ce qui permet au catalyseur de se dissoudre dans le monomère. A cette solution, on ajoute ensuite 6 x $10^{-4}$ mole de $C_2H_5AlCl_2$ (co-catalyseur) en solution dans 1 ml de chlorobenzène ; cela correspond à un rapport molaire $C_2H_5AlCl_2$/catalyseur égal à 12.

EXEMPLE 18

Catalyseur a décrit plus haut

Le mélange des réactifs est agité pendant environ 1 mn, à la température ambiante dans le réacteur ; il est ensuite transféré dans le moule, et laissé à la température ambiante. Le mélange étant suffisamment fluide, ce transfert a pu se faire facilement, et le moule des dimensions intérieures 55x110x5mm a pu être rempli complètement. La polymérisation du dicyclopentadiène s'effectue dans le moule ; après une quinzaine de minutes, on ouvre celui-ci, et on en retire une plaque bien formée, dure, rigide, insoluble dans le chlorobenzène, le benzène et le toluéne ; elle présente de bonnes caractéristiques de résistance aux chocs et à la rupture.

. EXEMPLE 19

Catalyseur B décrit plus haut.

Le moulage a été opéré comme dans l'exemple 18,et tout s'est passé de la même façon.

EXEMPLE 20

Catalyseur C décrit plus haut.

Il n'a pas été possible d'agiter le mélange des réactifs pendant plus d'une dizaine de secondes, parce qu'il est devenu rapidement très visqueux. On n'aurait donc pas pu le transférer dans le moule, après mélange. C'est le type des catalyseurs classiques, qui peuvent être utilisés dans le procédé RIM seulement lorsque le mélange réactionnel est additionné d'un modérateur de polymérisation. Par contre, les catalyseurs sélectionnés suivant le procédé de l'invention, A et B, permettent de pratiquer le système RIM sans aucun modérateur, comme le montrent les exemples 18 et 19.

**Revendications**

1. Procédé de polymérisation du dicyclopentadiène, avec une période initiale d'induction, en l'absence d'agent modérateur de polymérisation,à l'aide d'un catalyseur de formule

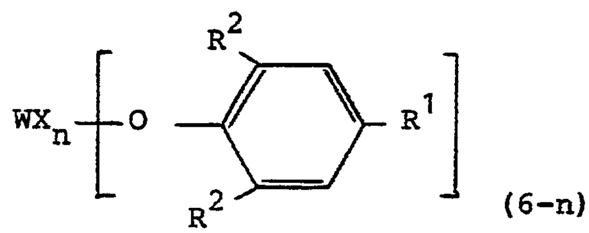

où X est Cl ou Br, n est 2 à 4, $R^1$ est H ou un groupe alkoxy et $R^2$ un H ou un alkyle ramifié en $C_3$ à $C_9$, ce catalyseur étant accompagné d'un co-catalyseur organo-métallique, caractérisé en ce que, dans le catalyseur utilisé, lorsque $R^1$ est un groupe alkoxy en $C_1$ à $C_8$, les $R^2$ sont H et n = 2 ou 3, tandis que lorsque $R^1$ est H, les $R^2$ sont des alkyles ramifiés en $C_3$ à $C_9$ et n est égal à 3 ou 4.

2. Procédé suivant la revendication 1, caractérisé en ce que $R^1$ est un alkoxy $-O-(CH_2)_m-CH_3$, avec m allant de 0 à 7, et en particulier méthoxy, éthoxy, propoxy ou butoxy.

3. Procédé suivant la revendication 1, caractérisé en ce que $R^1$ est un alkoxy du type

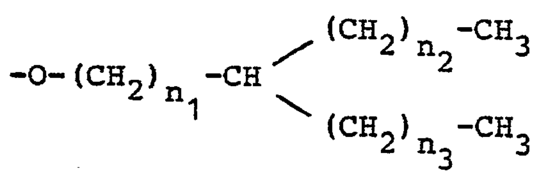

où $n_1$, $n_2$, et $n_3$ sont des nombres entiers, égaux ou différents, allant de 0 à 5, avec $0 \leqq n_1+n_2+n_3 \leqq 5$.

4. Procédé suivant la revendication 1, caractérisé en ce que $R^1$ est un alkoxy du type

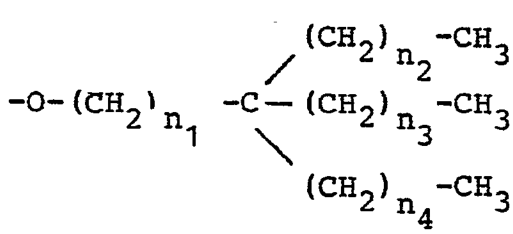

où $n_1$, $n_2$, $n_3$ et $n_4$ sont des nombres entiers de 0 à 4, satisfaisant à la condition $0 \leqq n_1+n_2+n_3+n_4+ \leqq 4$.

5. Procédé suivant une des revendication précédentes, caractérisé en ce que $R^2$ est un isopropyle, isobutyle, tert-butyle, iso-amyle ou tert amyle.

6. Procédé suivant une des revendications 1 à 4, caractérisé en ce que $R^2$ est de la forme

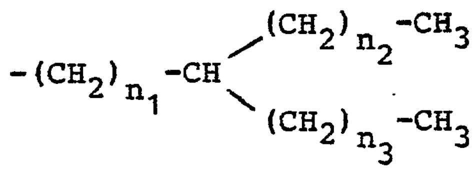

$n_1$,$n_2$ et $n_3$ désignant des nombres entiers, égaux ou différents, de 0 à 6, liés par la relation $0 \leqq n_1+n_2+n_3 \leqq 6$.

7. Procédé suivant une des revendication 1 à 4, caractérisé en ce que $R^2$ est de la forme

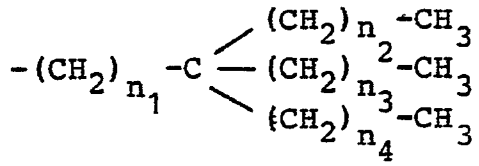

où $n_1$,$n_2$,$n_3$ et $n_4$, nombres entiers, égaux ou différents,allant de 0 à 5, répondent à la condition $0 \leqq n_1+n_2+n_3+n_4 \leqq 5$.

8. Procédé suivant une des revendications précédentes, caractérisé en ce que les deux alkyles ramifiés $R^2$ sont différents l'un de l'autre.

9. Procédé suivant une des revendications précédentes, caractérisé en ce que la période d'induction, avant le commencement de la polymérisation rapide, est de 1 à 20 mn.

10. Procédé suivant la revendication 1 ou 9, caractérisé en ce que le dicyclopentadiène est d'abord additionné de catalyseur et de cocatalyseur dans une zone de mélange et qu'il est ensuite transféré dans une zone de réaction où a lieu sa polymérisation.

11. Procédé suivant la revendication 10, caractérisé en ce que le catalyseur est le trichlorure tris(diisopropyl2,6 phénate) de tungstène et le cocatalyseur est $C_2H_5AlCl_2$ ou $(C_2H_5)_2AlCl$.

12. Procédé suivant la revendication 10, caractérisé en ce que le catalyseur est le dichlorure tétrakis (méthoxy-4 phénate) de tungstène et le cocatalyseur est $C_2H_5AlCl_2$ ou $(C_2H_5)_2AlCl$.

**Patentansprüche**

1. Verfahren zur Polymerisation von Dicyclopentadien mit einer anfänglichen Induktionsperiode in Abwesenheit eines Polymerisationsmoderators unter Zuhilfenahme eines Katalysators der Formel

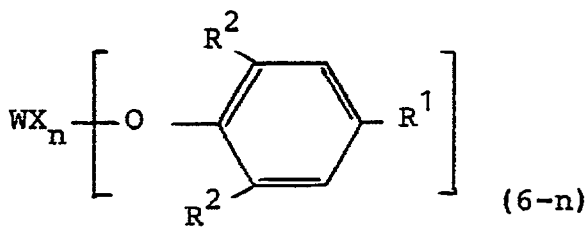

worin X Cl oder Br ist, n 2 bis 4 ist, $R^1$ H oder eine Alkoxygruppe ist und $R^2$ H oder ein verzweigtes $C_3$-$C_9$-Alkyl ist, wobei der Katalysator von einem metallorganischen Cokatalysator begleitet wird, dadurch gekennzeichnet, daß im verwendeten Katalysator, wenn $R^1$ eine $C_1$-$C_8$-Alkoxygruppe ist, beide $R^2$ H sind und n=2 oder 3 ist, während, wenn $R^1$ H ist, beide $R^2$ verzweigte $C_3$-$C_9$-Alkyle sind und n 3 oder 4 ist.

2. Verfahren nach Anspruch 1, dadurch gekennzeichnet, daß $R^1$ ein O-$(CH_2)_m$-$CH_3$-Alkoxy, worin m von 0 bis 7 reicht, und insbesondere Methoxy, Ethoxy, Propoxy oder Butoxy ist.

3. Verfahren nach Anspruch 1, dadurch gekennzeichnet, daß $R^1$ ein Alkoxy der Art ist

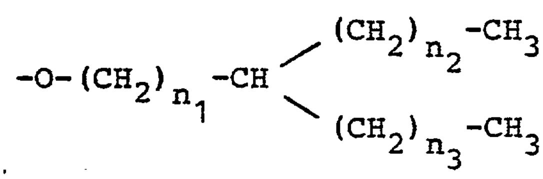

worin $n_1$, $n_2$ und $n_3$ gleiche oder verschiedene ganze Zahlen sind, die von 0 bis 5 reichen, wobei $0 \leq n_1+n_2+n_3 \leq 5$.

4. Verfahren nach Anspruch 1, dadurch gekennzeichnet, daß $R^1$ ein Alkoxy der Art ist

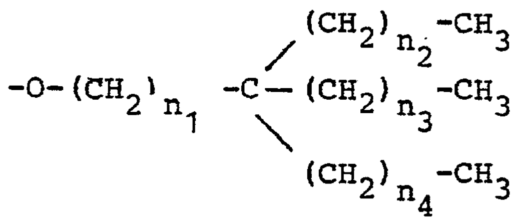

worin $n_1$, $n_2$, $n_3$ und $n_4$ ganze Zahlen von 0 bis 4 sind, die die Bedingung $0 \leq n_1 + n_2 + n_3 + n_4 \leq 4$ erfüllen.

5. Verfahren nach einem der vorstehenden Ansprüche, dadurch gekennzeichnet, daß $R^2$ Isopropyl, Isobutyl, tert.-Butyl, Isoamyl oder tert.-Amyl ist.

6. Verfahren nach einem der Ansprüche 1 bis 4, dadurch gekennzeichnet, daß $R^2$ die Formel aufweist

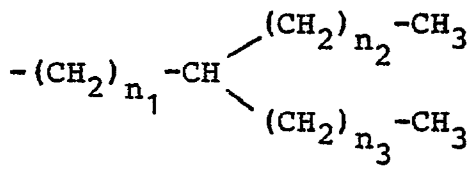

worin $n_1$, $n_2$ und $n_3$ gleiche oder verschiedene ganze Zahlen von 0 bis 6 bezeichnen, die durch die Relation $0 \leq n_1 + n_2 + n_3 \leq 6$ miteinander verbunden sind.

7. Verfahren nach einem der Ansprüche 1 bis 4, dadurch gekennzeichnet, daß $R^2$ die Formel aufweist

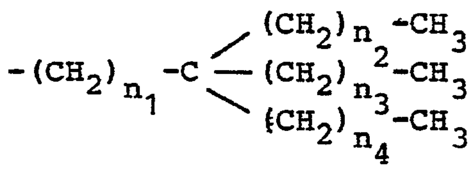

worin $n_1$, $n_2$, $n_3$ und $n_4$ gleiche oder verschiedene ganze Zahlen sind, die von 0 bis 5 reichen und der Bedingung $0 \leq n_1 + n_2 + n_3 + n_4 \leq 5$ entsprechen.

8. Verfahren nach einem der vorstehenden Ansprüche, dadurch gekennzeichnet, daß die zwei verzweigten Alkyle $R^2$ voneinander verschieden sind.

9. Verfahren nach einem der vorstehenden Ansprüche, dadurch gekennzeichnet, daß die Induktionszeit vor Beginn der schnellen Polymerisation 1 bis 20 Minuten beträgt.

10. Verfahren nach Anspruch 1 oder 9, dadurch gekennzeichnet, daß das Dicyclopentadien zuerst dem Katalysator und dem Cokatalysator in einer Mischungszone zugesetzt wird und dann in eine Reaktionszone oder an den Ort seiner Polymerisation transferiert wird.

11. Verfahren nach Anspruch 10, dadurch gekennzeichnet, daß der Katalysator Tris(2,6-diisopropylphenoxy) wolframtrichlorid und der Cokatalysator $C_2H_5AlCl_2$ oder $(C_2H_5)_2AlCl$ ist.

12. Verfahren nach Anspruch 10, dadurch gekennzeichnet, daß der Katalysator Tetrakis(4-methoxyphenoxy) wolframdichlorid und der Cokatalysator $C_2H_5AlCl_2$ oder $(C_2H_5)_2AlCl$ ist.

## Claims

1. Process of polymerisation of dicyclopentadiene, with an initial induction period, in the absence of moderating agent for the polymerisation, with the aid of a catalyst of the formula

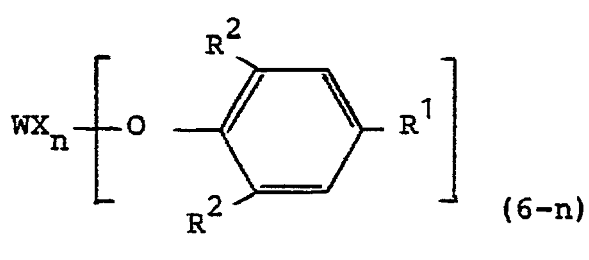

where X is Cl or Br, n is 2 to 4, $R^1$ is H or an alkoxy group and $R^2$ H or a branched $C_3$ to $C_9$ alkyl, the cata-

lyst being accompanied by an organometallic co-catalyst, characterised in that, in the catalyst used, when $R^1$ is a $C_1$ to $C_8$ alkoxy group, the $R^2$ are H and n=2 or 3, while when $R^1$ is H the $R^2$ are branched $C_3$ to $C_9$ alkyls, and n equals 3 or 4.

2. Process according to claim 1, characterised in that, $R^1$ is an alkoxy $-O-(CH_2)_m-CH_3$, with m ranging from 0 to 7, and in particular methoxy, ethoxy, propoxy or butoxy.

3. Process according to claim 1, characterised in that $R^1$ is an alkoxy of the type

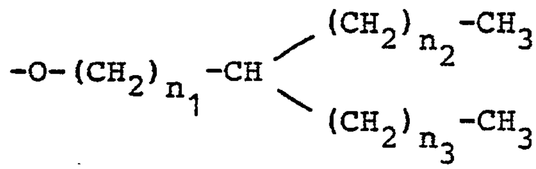

where $n_1$, $n_2$ and $n_3$ are whole numbers, equal or different, ranging from 0 to 5 with $0 \leq n_1 + n_2 + n_3 \leq 5$.

4. Process according to claim 1, characterised in that $R^1$ is an alkoxy of the type

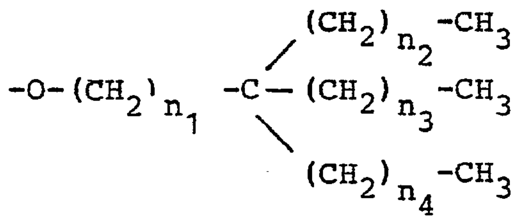

where $n_1$, $n_2$, $n_3$ and $n_4$ are whole numbers from 0 to 4 satisfying the condition $0 \leq n_1 + n_2 + n_3 + n_4 \leq 4$.

5. Process according to any of the preceding claims, characterised in that $R^2$ is isopropyl, isobutyl, tert-butyl, iso-amyl or tert-amyl.

6. Process according to one of claims 1 to 4, characterised in that $R^2$ is

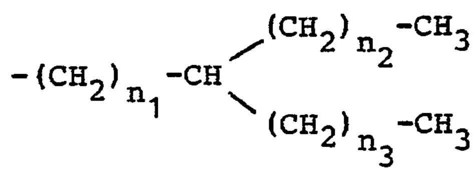

$n_1$, $n_2$ and $n_3$ designating whole numbers, equal or different, from 0 to 6 related by the relationship $0 \leq n_1 + n_2 + n_3 \leq 6$.

7. Process according to any of claims 1 to 4, characterised in that $R^2$ is

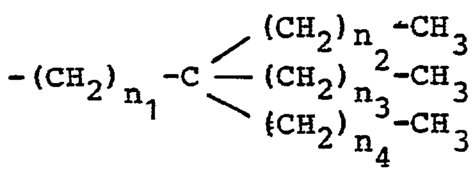

where $n_1$, $n_2$, $n_3$ and $n_4$, whole numbers, equal or different, range from 0 to 5, satisfy the condition $0 \leq n_1 + n_2 + n_3 + n_4 \leq 5$.

8. Process according to any of the preceding claims, characterised in that the two branched alkyls $R_2$ are different from each other.

9. Process according to any of the preceding claims, characterised in that the induction period, before commencement of the rapid polymerisation, is from 1 to 20 min.

10. Process according to claim 1 or 9, characterised in that the catalyst and the co-catalyst are first added to the dicylopentadiene in a mixing zone and that the mixture is then transferred into a reaction zone where the polymerisation takes place.

11. Process according to claim 10, characterised in that the catalyst is trichloro tris (2,6-diisopropylphenate) of tungsten and the co-catalyst is $C_2H_5AlCl_2$ or $(C_2H_5)_2AlCl$.

12. Process according to claim 10, characterised in that the catalyst is dichloro tetrakis (4-methoxy phenate) of tungsten and the co-catalyst is $C_2H_5AlCl_2$ or $(C_2H_5)_2AlCl$.